# EUROPEAN PATENT APPLICATION

(11) **EP 2 945 423 A1**
(43) Date of publication of application: **18.11.2015**
(21) Application number: 15167638.4
(22) Date of filing: 13.05.2015
(51) Int. Cl.: H04W 36/00, H04W 76/02

(54) **DEVICE FOR HANDLING MEASUREMENT CONFIGURATION FOR DUAL CONNECTIVITY WITH CARRIER AGGREGATION**

(30) Priority: 13.05.2014 US 201461992246 P
(71) Applicant: HTC Corporation, Taoyuan City 330 (TW)
(72) Inventor: Chien, Ho-Sung, 330, Taoyuan District, Taoyuan City (TW); Wu, Chih-Hsiang, 330, Taoyuan District, Taoyuan City (TW)
(74) Representative: Schmidbauer, Andreas Konrad

(57) **Abstract**

A communication device for handling a measurement configuration comprises a storage unit and a processing means coupled to the storage unit. The processing means is configured to execute instructions stored in the storage unit. The instructions comprise communicating with a master base station and a secondary base station; detecting a link failure related to the secondary base station while communicating with the master base station; keeping a first measurement configuration for measuring a first carrier of the master base station and removing a second measurement configuration for measuring a second carrier of the secondary base station in response to the detection of the link failure; and transmitting a message for indicating the link failure to the master base station.

## Description

### Background of the Invention

### 1. Field of the Invention

The present invention is related to a communication device used in a wireless communication system, and more particularly, to a communication device of handling a measurement configuration in a wireless communication system.

### 2. Description of the Prior Art

A long-term evolution (LTE) system supporting the 3rd Generation Partnership Project (3GPP) Rel-8 standard and/or the 3GPP Rel-9 standard are developed by the 3GPP as a successor of a universal mobile telecommunications system (UMTS), for further enhancing performance of the UMTS to satisfy increasing needs of users. The LTE system includes a new radio interface and a new radio network architecture that provides a high data rate, low latency, packet optimization, and improved system capacity and coverage. In the LTE system, a radio access network known as an evolved universal terrestrial radio access network (E-UTRAN) includes multiple evolved Node-Bs (eNBs) for communicating with multiple user equipments (UEs), and for communicating with a core network including a mobility management entity (MME), a serving gateway, etc., for Non-Access Stratum (NAS) control.

A LTE-advanced (LTE-A) system, as its name implies, is an evolution of the LTE system. The LTE-A system targets faster switching between power states, improves performance at the coverage edge of an eNB, and includes advanced techniques, such as carrier aggregation (CA), coordinated multipoint (CoMP) transmission/reception, uplink multiple-input multiple-output (UL-MIMO), etc. For a UE and an eNB to communicate with each other in the LTE-A system, the UE and the eNB must support standards developed for the LTE-A system, such as the 3GPP Rel-10 standard or later versions.

The UE may receive packets (e.g., transport blocks (TBs)) transmitted by two eNBs, when the UE is configured with a dual connectivity, wherein one of the eNBs is a master eNB (MeNB) and the other eNB is a secondary eNB (SeNB). Throughput of the UE is improved when the dual connectivity is operated. However, wireless links between the UE and the eNBs may not be stable due to characteristics of the wireless links. For example, a radio link failure may happen between the UE and the SeNB. The UE does not know how to how to handle a measurement configuration for the SeNB, when the radio link failure occurs between the UE and the SeNB. In addition, the MeNB does know how to handle the radio link failure. For example, the MeNB does not know whether the radio link failure is recovered, and corresponding operations cannot be done.

Thus, how to handle the measurement configuration and the recovery of the radio link failure is an important topic to be discussed.

### Summary of the Invention

The present invention therefore provides a communication device for handling a measurement configuration to solve the abovementioned problem.

A communication device for handling a measurement configuration comprises a storage unit and a processing means coupled to the storage unit. The processing means is configured to execute instructions stored in the storage unit. The instructions comprise communicating with a master base station and a secondary base station; detecting a link failure related to the secondary base station while communicating with the master base station; keeping a first measurement configuration for measuring a first carrier of the master base station and removing a second measurement configuration for measuring a second carrier of the secondary base station in response to the detection of the link failure; and transmitting a message for indicating the link failure to the master base station.

A communication device for handling a measurement configuration comprises a storage unit and a processing means coupled to the storage unit. The processing means is configured to execute instructions stored in the storage unit. The instructions comprise communicating with a master base station and a secondary base station; detecting a link failure related to the secondary base station while communicating with the master base station; keeping a first measurement configuration for measuring a first carrier of the master base station and keeping a second measurement configuration for measuring a second carrier of the secondary base station in response to the detection of the link failure; and transmitting a message for indicating the link failure to the master base station.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of a wireless communication system according to an example of the present invention.
Fig. 2 is a schematic diagram of a communication device according to an example of the present invention.
Fig. 3 is a flowchart of a process according to an example of the present invention.
Fig. 4 is a flowchart of a process according to an example of the present invention.

### Detailed Description

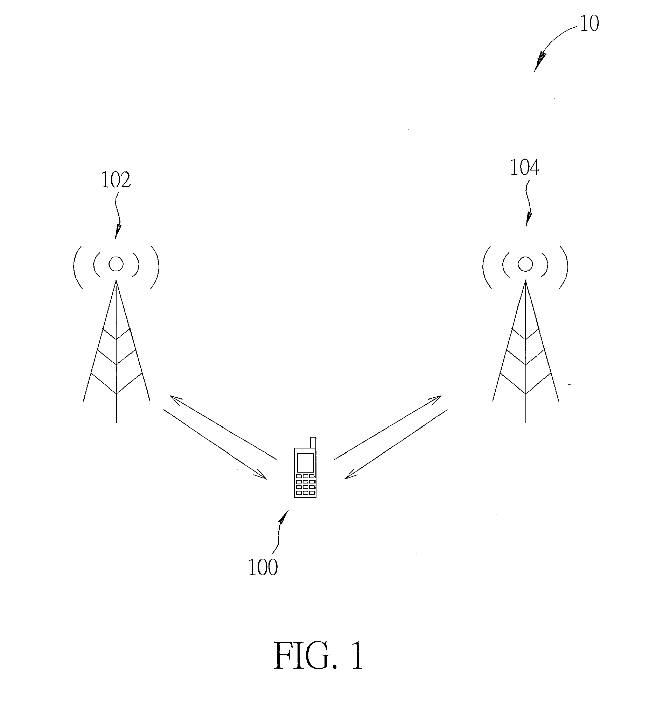

Fig. 1 is a schematic diagram of a wireless communication system 10 according to an example of the present invention. The wireless communication system 10 is briefly composed of a user equipment (UE) 100 and base stations (BSs) 102 and 104. In Fig. 1, the UE 100, the BSs 102 and 104 and are simply utilized for illustrating the structure of the wireless communication system 10. Practically, the BS 102 and/or the BS 104 may be an evolved NB (eNB) and/or a relay station in an evolved UTRAN (E-UTRAN), a long term evolution (LTE) system, a LTE-Advanced (LTE-A) system or an evolution of the LTE-A system. The wireless communication system 10 may be a time-division duplexing (TDD) system (i.e., the TDD mode is operated) or a frequency-division duplexing (FDD) system (i.e., the FDD mode is operated). In Fig. 1, coverage areas of the BS 102 and the BS 104 may be partly overlapped.

As shown in Fig. 1, the UE 100 may be configured to communicate with the BS 102 and the BS 104 at the same time according to a dual connectivity configured to the UE 100. That is, the UE 100 may perform a transmission/reception via both the BSs 102 and 104. For example, the UE 100 may receive packets (e.g., transport blocks (TBs)) from the BSs 102 and 104 according to the dual connectivity, or the UE 100 may transmit packets (e.g. , TBs) to the BSs 102 and 104 according to the dual connectivity. In general, it means that the UE 100 receives the packets from at least one cell of the BS 102 and at least one cell of the BS 104 according to the dual connectivity, when the UE 100 receives the packets from both the BSs 102 and 104. Similarly, it means that the UE 100 transmits the packets to at least one cell of the BS 102 and/or at least one cell of the BS 104 according to the dual connectivity, when the UE 100 transmits the packets to both the BSs 102 and 104. In addition, one of the BSs 102 and 104 may be a master eNB (MeNB) and the other of the BSs 102 and 104 may be a secondary eNB (SeNB) according to the dual connectivity defined in 3GPP. One of the cell(s) of the MeNB communicating with the UE 100 may be a primary cell (PCell) and the other cell(s) (if available) of the MeNB may be secondary cell(s) (SCell(s)). One of the cell(s) of the SeNB communicating with the UE 100 may be a primary SCell (PSCell), and the other cell(s) (if available) of the SeNB may be SCell(s).

The UE 100 may be a low cost device (e.g., machine type communication (MTC) device), a device-to-device (D2D) device, a mobile phone, a laptop, a tablet computer, an electronic book, a portable computer system, or combination thereof. In addition, the UE 100, the BS 102 or the BS 104 may be seen as a transmitter or a receiver according to its transmission direction, e.g., for an uplink (UL), the UE 100 is the transmitter and the BS 102 and/or the BS 104 is the receiver, and for a downlink (DL), the BS 102 and/or the BS 104 is the transmitter and the UE 100 is the receiver.

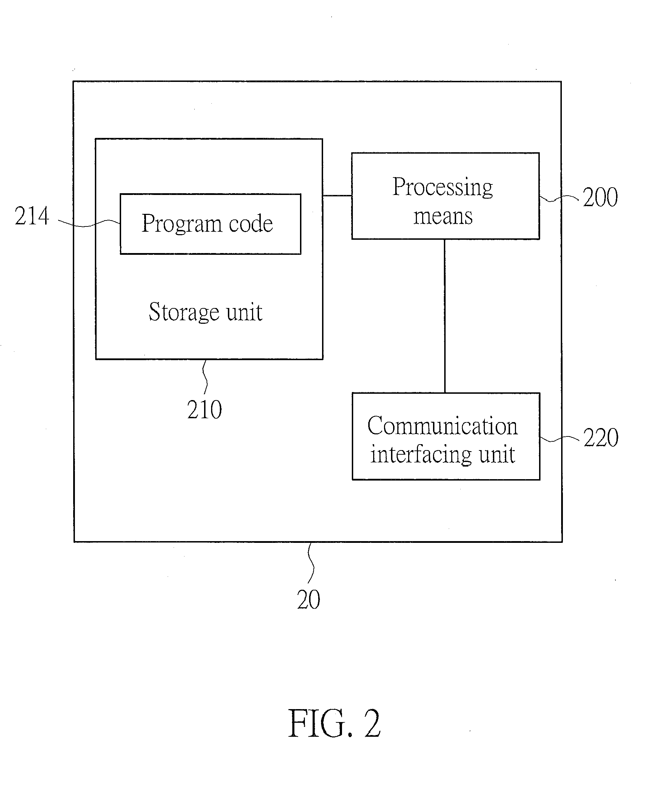

Fig. 2 is a schematic diagram of a communication device 20 according to an example of the present invention. The communication device 20 may be the UE 100, the BS 102 and/or the BS 104 shown in Fig. 1, but is not limited herein. The communication device 20 may include a processing means 200 such as a microprocessor or Application Specific Integrated Circuit (ASIC), a storage unit 210 and a communication interfacing unit 220. The storage unit 210 may be any data storage device that may store a program code 214, accessed and executed by the processing means 200. Examples of the storage unit 210 include but are not limited to a subscriber identity module (SIM), read-only memory (ROM), flash memory, random-access memory (RAM), Compact Disc Read-Only Memory (CD-ROM), digital versatile disc-ROM (DVD-ROM), Blu-ray Disc-ROM (BD-ROM), magnetic tape, hard disk, optical data storage device, non-volatile storage unit, non-transitory computer-readable medium (e.g., tangible media), etc. The communication interfacing unit 220 is preferably a transceiver and is used to transmit and receive signals (e.g., data, signals, messages and/or packets) according to processing results of the processing means 200.

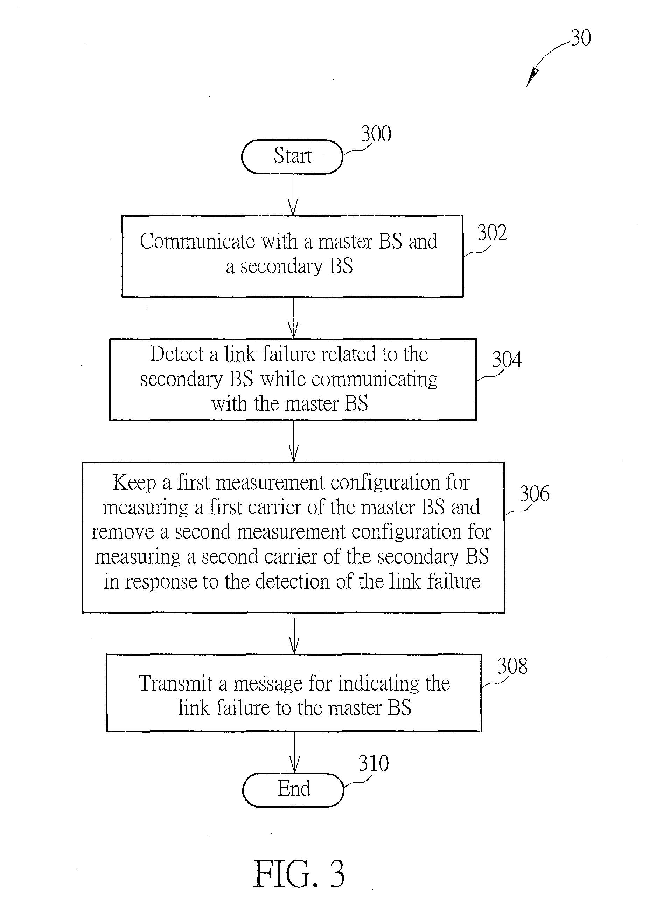

Fig. 3 is a flowchart of a process 30 according to an example of the present invention. The process 30 may be utilized in a communication device (e.g., the UE 100), for handling a link failure. The process 30 may be compiled into the program code 214 and includes the following steps:
Step 300: Start.
Step 302: Communicate with a master BS and a secondary BS.
Step 304: Detect a link failure related to the secondary BS while communicating with the master BS.
Step 306: Keep a first measurement configuration for measuring a first carrier of the master BS and remove a second measurement configuration for measuring a second carrier of the secondary BS in response to the detection of the link failure.
Step 308: Transmit a message for indicating the link failure to the master BS.
Step 310: End.

According to the process 30, the communication device communicates with a master BS (e.g., the BS 102) and a secondary BS (e.g., the BS 104), e.g., according to the dual connectivity. The communication device may detect a link failure (e.g., radio link failure) related to the secondary BS while communicating with the master BS. Then, the communication device keeps a first measurement configuration for measuring a first carrier (e.g., first DL carrier) of the master BS, removes a second measurement configuration for measuring a second carrier (e.g., second DL carrier) of the secondary BS, and transmits a message for indicating the link failure to the master BS in response to the detection of the link failure. That is, the communication device does not transmit a measurement report of the second carrier after the second measurement configuration is released. Further, the communication device may stop measuring the second carrier to save power consumption for the measurement, because the measurement report will not be transmitted. Thus, the master BS can handle the link failure according to the link failure indicated by the communication device, after receiving the message. In addition, the communication device does not need to transmit an unnecessary measurement report according to the second measurement configuration.

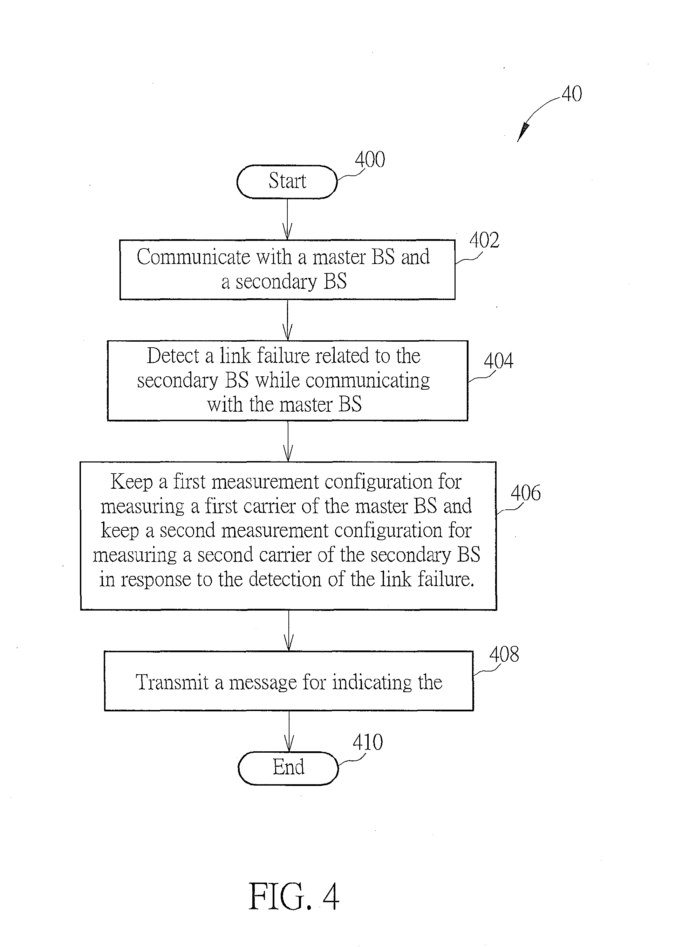

Fig. 4 is a flowchart of a process 40 according to an example of the present invention. The process 40 may be utilized in a communication device (e.g., the UE 100), for handling a link failure. The process 40 may be compiled into the program code 214 and includes the following steps:
Step 400: Start.
Step 402: Communicate with a master BS and a secondary BS.
Step 404: Detect a link failure related to the secondary BS while communicating with the master BS.
Step 406: Keep a first measurement configuration for measuring a first carrier of the master BS and keep a second measurement configuration for measuring a second carrier of the secondary BS in response to the detection of the link failure.
Step 408: Transmit a message for indicating the link failure to the master BS.
Step 410: End.

According to the process 40, the communication device communicates with a master BS (e.g., the BS 102) and a secondary BS (e.g., the BS 104), e.g., according to the dual connectivity. The communication device may detect a link failure (e.g., radio link failure) related to the secondary BS while communicating with the master BS. Then, the communication device keeps a first measurement configuration for measuring a first carrier (e.g., first DL carrier) of the master BS, keeps a second measurement configuration for measuring a second carrier (e.g., second DL carrier) of the secondary BS, and transmits a message for indicating the link failure to the master BS. Since the first measurement configuration and the second measurement configuration are kept, the communication device may transmit a first measurement report of the first carrier of the master BS according to the first measurement configuration and a second measurement report of the second carrier to the master BS according to the second measurement configuration. The master BS may determine how to handle the link failure according to the second measurement report.

Realization of process 40 of the present invention is not limited to the above description. In one example, the communication device may keep at least one other measurement configuration (e.g., all other measurement configuration(s)) for measuring the second carrier except the second measurement configuration. If a third carrier (e.g., third DL carrier) of the second BS is configured to the communication device, the communication device may keep all measurement configuration (s) for measuring the third carrier as well.

In another example, process 40 may be combined with process 30. The communication device may release a third measurement configuration for measuring the second carrier. That is, two measurement configurations are configured for measuring the second carrier, and one of the measurement configurations is kept while the other of the measurement configurations (i.e., the third measurement configuration) is released due to the link failure. For example, the second carrier may be treated as a serving frequency according to the released measurement configuration which may include a reporting triggering event A1, A2 or A6. The second carrier may be treated as a neighboring frequency according to the kept measurement configuration which may include a reporting triggering event A3, A4 or A5. In one example, the second measurement configuration may include a reporting triggering event for the master BS to add the cell, to another cell of the secondary BS on the second carrier, or to add a cell of another secondary BS. In one example, the second measurement configuration may include a reporting triggering event A1, A2 or A6.

Realization of process 30 and process 40 of the present invention is not limited to the above description. Description below may be realized to process 30 and process 40.

The first carrier may be a DL component carrier belonging to a cell of the master BS. The second carrier may be a DL component carrier belonging to a cell of the secondary BS. In one example, the master BS may be a MeNB, and the secondary BS may be a SeNB. The cell of the MeNB may be a PCell and the cell of the SeNB may be a PSCell. The third carrier may be a DL component carrier belonging to another cell of the SeNB. The other cell of the SeNB may be a SCell. The link failure may be a radio link failure, a random access problem or a RLC retransmission problem detected on the PSCell. There may be a RRC connection between the communication device and the MeNB, and the communication device may be configured to communicate with the MeNB and the SeNB, i.e., dual connectivity. The communication device transmits the message indicating the link failure via Signaling Radio Bearer (SRB) 1 of the RRC connection to the MeNB. After the MeNB receives the message indicating the link failure and a measurement report corresponding to a measurement configuration for measuring the third carrier, the MeNB may configure the other cell as the PSCell.

In one example, the first measurement configuration may be configured by a first RRCConnectionReconfiguration transmitted by the master BS and the second measurement configuration may be configured by a second RRCConnectionReconfiguration transmitted by the master BS, e.g., before the link failure is detected. In one example, the communication device may further keep a configuration of the cell of the secondary BS on the second component. That is, the cell on the secondary carrier may be kept, after the link failure related to the secondary BS is detected. The other cell of on the third carrier may be kept after the link failure related to the secondary BS is detected.

Furthermore, the'communication device does not perform a transmission to the cell after the communication device detects a link failure of related to the secondary BS since the transmission may cause interference to a cell of another BS. In addition, the communication device may stop monitoring a PDCCH from a cell of the secondary BS on the second carrier after the communication device detects the link failure related to the secondary BS. Hence in the process 40, the communication device still transmits a measurement report of the second carrier according to the second measurement configuration, while the PDCCH is not monitored and/or the transmission to the cell is not performed. After the master BS receives the measurement report, the master BS can determine whether to transmit an RRCConnectionReconfiguration for configuring the communication device to resume monitoring the PDCCH, to perform the transmission to the secondary BS, or to release the cell of the secondary BS. Thus, the master BS can handle the link failure according to the link failure indicated by the communication device, after receiving the message. In addition, the communication device may be able to receive a notification for resuming the stopped operations from the master BS, after transmitting a measurement report according to the second measurement configuration to the master BS.

In one example, the communication device may transmit a measurement report to the master BS according to the second measurement configuration. Accordingly, the communication device may receive a RRCConnectionReconfiguration for configuring the communication device to resume monitoring the PDCCH and the transmission to the cell of the secondary BS on the secondary, wherein the RRCConnectionReconfiguration is transmitted by the master BS according the measurement report. That is, the master BS can configure the communication device to resume the stopped operations according to the received measurement report. In another example, the communication device may transmit a measurement report to the master BS according to the second measurement configuration. Accordingly, the communication device may receive a RRCConnectionReconfiguration for configuring the communication device to release the cell of the secondary BS on the secondary, wherein the RRCConnectionReconfiguration is transmitted by the master BS according the measurement report. That is, the master BS can configure the communication device to release the cell completely according to the received measurement report.

A carrier (UL carrier or DL carrier) mentioned above may be a FDD carrier for the FDD mode or a TDD carrier for the TDD mode. The FDD carrier may include subframes with the same transmission direction (e.g., UL or DL). The TDD carrier may include subframes with different transmission directions, and the transmission directions of the subframes are determined according to a UL/DL configuration of the TDD carrier.

Those skilled in the art should readily make combinations, modifications and/or alterations on the abovementioned description and examples. The abovementioned steps of the processes including suggested steps can be realized by means that could be a hardware, a firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include a system on chip (SOC), system in package (SIP), a computer on module (COM), and the communication device 20.

To sum up, according to the present invention, a communication device handles a measurement configuration of a carrier where a link failure is occurred, such that a measurement report triggered by the measurement configuration can be processed (e.g., transmitted) correspondingly. The communication device further transmits a message to a master BS, for the master BS to handle the link failure. Thus, the operations of the communication device and the master BS are performed regularly.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A communication device for handling a measurement configuration, comprising:
a storage unit for storing instructions of:
communicating with a master base station and a secondary base station;
detecting a link failure related to the secondary base station while communicating with the master base station;
keeping a first measurement configuration for measuring a first carrier of the master base station and removing a second measurement configuration for measuring a second carrier of the secondary base station in response to the detection of the link failure; and
transmitting a message for indicating the link failure to the master base station; and
a processing means, coupled to the storage unit, configured to execute the instructions stored in the storage unit.

2. The communication device of claim 1, wherein the first measurement configuration is configured by a first RRCConnectionReconfiguration transmitted by the master base station, and the second measurement configuration is configured by a second RRCConnectionReconfiguration transmitted by the master base station.

3. The communication device of claim 1, wherein the instructions further comprise:
releasing a configuration of a cell of the secondary base station on the second carrier.

4. The communication device of claim 1, wherein the instructions further comprise:
keeping a third measurement configuration for measuring the second carrier.

5. The communication device of claim 1, wherein the second measurement configuration comprises a reporting triggering event for the master base station to release a cell of the secondary base station on the second carrier or to replace the cell with another cell of the secondary base station.

6. A communication device for handling a measurement configuration, comprising:
a storage unit for storing instructions of:
communicating with a master base station and a secondary base
station;
detecting a link failure related to the secondary base station while communicating with the master base station;
keeping a first measurement configuration for measuring a first carrier of the master base station and keeping a second measurement configuration for measuring a second carrier of the secondary base station in response to the detection of the link failure; and
transmitting a message for indicating the link failure to the master base station; and
a processing means, coupled to the storage unit, configured to execute the instructions stored in the storage unit.

7. The communication device of claim 6, wherein the first measurement configuration is configured by a first RRCConnectionReconfiguration transmitted by the master base station, and the second measurement configuration is configured by a second RRCConnectionReconfiguration transmitted by the master base station.

8. The communication device of claim 6, wherein the instructions further comprise:
releasing a configuration of the cell.

9. The communication device of claim 6, wherein the instructions further comprise:
releasing a third measurement configuration for measuring the second carrier.

10. The communication device of claim 6, wherein the second measurement configuration comprises a reporting triggering event for the master base station to add the cell, to another cell of the secondary base station on the second carrier, or to add a cell of another secondary base station.

11. The communication device of claim 6, wherein the second measurement configuration comprises a reporting triggering event A1, A2 or A6.

12. The communication device of claim 6, wherein the instructions further comprise:
transmitting a measurement report to the master base station according to the second measurement configuration; and
receiving a RRCConnectionReconfiguration for configuring the communication device to resume monitoring the PDCCH and the transmission to the cell, wherein the RRCConnectionReconfiguration is transmitted by the master base station according the measurement report.

13. The communication device of claim 6, wherein the instructions further comprise:
transmitting a measurement report to the master base station according to the second measurement configuration; and
receiving a RRCConnectionReconfiguration for configuring the communication device to release the cell, wherein the RRCConnectionReconfiguration is transmitted by the master base station according the measurement report.

14. The communication device of claim 6, wherein the instructions further comprise:
not monitoring a physical downlink (DL) control channel (PDCCH) from a cell of the secondary base station on the second carrier; and
not performing a transmission to the cell.

15. The communication device of claim 6, wherein the instructions further comprise:
keeping at least one other measurement configuration for measuring the second carrier of the secondary base station except the second measurement configuration.
